# FASCICULE DE BREVET EUROPEEN

(11) **EP 1 836 136 B1**
(45) Date de publication et mention de la délivrance du brevet: **04.05.2011**
(21) Numéro de dépôt: 05847557.5
(22) Date de dépôt: 15.12.2005
(51) Int. Cl.: C03B 23/035, C03B 23/03, C03B 35/14, C03B 35/20

(54) **PROCEDE DE BOMBAGE DE FEUILLES DE VERRE PAR ASPIRATION**
VERFAHREN ZUM WÖLBEN VON GLASSCHEIBEN DURCH SAUGEN
METHOD FOR CAMBERING GLASS SHEETS BY SUCTION

(30) Priorité: 31.12.2004 FR 0453290
(43) Date de publication de la demande: 26.09.2007
(73) Titulaire: SAINT-GOBAIN GLASS FRANCE, 92400 Courbevoie (FR)
(72) Inventeur: BALDUIN, Michael, 52477 Alsdorf (DE); LABROT, Michael, 52072 Aachen (DE); OLLFISCH, Karl-josef, 52159 ROETGEN (DE); RADERMACHER, Herbert, B-4730 Raeren (BE); SCHALL, Günther, 52372 Kreuzau (DE)
(74) Mandataire: Colombier, Christian
(86) Numéro de dépôt international: PCT/FR2005/051093
(87) Numéro de publication internationale: WO 2006/072721

(56) Documents cités:
- EP-A- 0 363 097
- EP-A- 0 872 456
- WO-A-02/064519
- DE-B3- 10 314 267
- FR-A- 2 852 951
- US-A- 3 778 244
- US-A- 4 859 225
- US-A- 5 006 146
- US-A- 5 651 805
- US-A- 5 713 976
- PATENT ABSTRACTS OF JAPAN vol. 2002, no. 12, 12 décembre 2002 (2002-12-12) -& JP 2002 226225 A (ASAHI GLASS CO LTD), 14 août 2002 (2002-08-14)

## Description

L'invention concerne un procédé de bombage de vitrages selon lequel le verre est aspiré par des ouvertures traversant un moule plein concave pour prendre la forme dudit moule concave. Le procédé selon l'invention est plus particulièrement adapté à une production industrielle rapide, menant à des vitrages exempts de défauts optiques.

L'invention concerne tout particulièrement le bombage simultané de feuilles de verre superposées (généralement 2 feuilles de verre superposées) que l'on souhaite ultérieurement assembler en un vitrage feuilleté, notamment du type de ceux destiné à faire office de pare-brise de véhicule automobile. L'assemblage des feuilles se réalise de façon connue de l'homme du métier par insertion entre les feuilles de verre d'une couche de polymère, généralement du type polyvinylbutyral.

Le EP0363097 enseigne l'aspiration d'une feuille simple au travers d'un moule inférieur concave. Après bombage, la feuille est séparée du moule inférieur par un cadre entourant la forme concave et remontant pour entraîner la feuille. Pour pouvoir entraîner la feuille vers le haut, il faut bien que celle-ci dépasse de tous les bords du moules concave. Un tel dépassement n'est pas satisfaisant sur le plan du bombage des bords, lesquels ne sont pas toujours précisément mis en forme pendant le bombage. Il en résulte un risque de défauts de bombage aux bords de la feuille. Par ailleurs, ce document ne donne aucune information quant au bombage de plusieurs feuilles superposées.

Le US3778244 enseigne une forme supérieure équipée d'une jupe d'aspiration disposée au dessus d'un moule inférieur muni d'orifices d'aspiration à travers sa face pleine. Ces deux formes de bombage travaillent l'une après l'autre sans exercer aucun pressage du verre, puisque lorsqu'une feuille a été bombée partiellement contre la forme supérieure, on laisse tomber simplement cette feuille sur la forme inférieure (col 5 lignes 3-6).

Le W002064519 enseigne le bombage de feuilles superposées au travers d'un moule inférieur concave. Un contre moule supérieur peut venir serrer les bords des deux feuilles ensemble au moment de l'aspiration par la forme concave. Ici également, c'est un cadre entourant la forme inférieure qui, en remontant, prend en charge les feuilles après bombage. En conséquence, les feuilles doivent aussi dépasser de la forme inférieure. Par ailleurs, même si ce procédé représente un progrès notable, on souhaite pouvoir l'accélérer dans le cadre d'une mise en oeuvre industrielle. Pour pouvoir l'accélérer, on peut jouer sur la valeur du vide utilisé pendant l'aspiration. La demanderesse a cependant observé qu'il convenait de ne pas pousser le vide au-delà d'une dépression d'environ 100 mbar (différence entre la pression atmosphérique et la pression dans le moule inférieur), car cela pouvait conduire à des défauts optiques visibles à l'oeil nu, du type vision déformée. Il semble que ce défaut provienne en fait d'un écartement se créant entre les différentes feuilles pendant l'aspiration. Cet écart peut même atteindre 1 mm dans la région centrale. Les distorsions optiques qui en résultent peuvent atteindre 90 mdpt (millidioptries).

L'invention résout les problèmes sus-mentionnés. Selon l'invention, on utilise des moyens d'aspiration vers le haut, notamment du type jupe d'aspiration, pour prendre en charge les feuilles de verre, avant l'étape de bombage par aspiration. On a découvert que l'utilisation de ce type de moyens de support procurait un double avantage : 1) d'une part il n'est plus nécessaire que les feuilles débordent du moule concave inférieur, 2) d'autre part et de façon inattendue, si l'aspiration/maintient (aspiration vers le haut) est correctement combinée avec l'aspiration/bombage (aspiration vers le bas) au travers du moule inférieur, il est possible de pousser le vide dans le moule inférieur concave au delà de l'obtention d'une dépression de 100 mbars sans pour autant engendrer des problèmes de défauts optiques. De ce fait, l'invention permet le bombage de feuilles superposées avec des cadences très rapides de fabrication.

Sans que cette explication ne puisse procurer une limitation à la portée de la présente invention, il semble que l'aspiration vers le haut enlève une part substantielle d'air entre les feuilles superposées et contribue à une meilleure association des feuilles superposées entre elles. Ceci a pour conséquence que les feuilles sont toutes mieux fidèlement entraînées en direction de la forme concave inférieure pendant l'aspiration/bombage sur le moule inférieur. En effet, il semble que la présence d'air résiduel entre les feuilles pourrait empêcher une feuille non directement en contact avec le moule inférieur de suivre la feuille inférieur pendant l'étape de bombage par aspiration.

Ainsi, l'invention concerne notamment un procédé de formage de feuilles de verre superposées (généralement deux feuilles de verre superposées) portées à leur température de formage, comprenant:
- une étape dite d'aspiration/maintien comprenant la prise en charge des feuilles par une forme supérieure munie de moyens d'aspiration créant un flux d'air vers le haut léchant la tranche des feuilles, ladite aspiration étant suffisante pour soulever et maintenir les feuilles superposées contre ladite forme supérieure, puis
- une étape dite de pressage comprenant le pressage des feuilles entre la forme supérieure et une forme inférieure concave pleine munie d'ouvertures, ledit pressage commençant alors que l'aspiration de l'étape précédente n'est pas encore terminée ou se termine, puis
- une étape dite d'aspiration/bombage comprenant le formage des feuilles superposées, par aspiration de la face principale de la feuille inférieure au travers des ouvertures du moule inférieur concave, ledit formage par aspiration commençant alors que le pressage de l'étape précédente n'est pas encore terminée, puis
- une étape dite de refroidissement comprenant le refroidissement des feuilles.

Selon l'invention, on a découvert que l'aspiration exercée pendant l'étape d'aspiration/maintien sert non seulement à retenir les feuilles afin les mettre en position appropriée au dessus du moule inférieur de bombage, mais de plus, elle évacue l'air entre les feuilles. C'est pourquoi, il est préféré selon l'invention de commencer le pressage alors que l'aspiration vers le haut fonctionne encore ou est en train de se terminer, car le pressage procure un contact intime entre les feuilles et assure l'étanchéité entre elles, à un moment où l'air a été évacué entre les feuilles. En pratique, on peut arrêter l'aspiration vers le haut dès que le pressage commence, de sorte que l'arrêt de l'aspiration vers le haut peut être quasi-simultané au commencement du pressage. En effet, aucun effet élastique n'intervient pour séparer les feuilles. Ce pressage empêche donc un retour d'air entre les feuilles. Les feuilles sont alors prêtes à être bombées par aspiration de la feuille inférieure. Cette aspiration (vers le bas) par le moule inférieur commence alors que le pressage n'est pas encore terminé. L'absence d'air entre les feuilles fait que toutes les feuilles suivent correctement la feuille inférieure au cours de son formage. On a constaté que l'on pouvait exercer une dépression de 350 mbar à l'aspiration/bombage, ce qui s'est traduit pas un écart maximal entre les feuilles de 0,5 mm, et une distorsion optique de moins de 70 mdpt, ces valeurs pouvant varier selon la géométrie et la complexité des formes de bombage recherchées. Il n'est pas nécessaire de poursuivre le pressage pendant tout le bombage par aspiration. En effet, une fois que le bombage par aspiration a commencé et une fois que les contraintes viscoélastiques sont relaxées, on peut relâcher le pressage car les feuilles superposées restent bien plaquées entre elle. De préférence, on exécute donc l'aspiration de l'étape d'aspiration/bombage pendant une durée suffisante pour que la forme souhaitée soit obtenue et pour que les contraintes viscoélastiques après obtention de cette forme finale se soient relaxées.

La forme supérieure prenant en charge les feuilles peut être une forme pleine ou de préférence un cadre. Par cadre, on entend une bande d'un matériau adapté (généralement métallique) offrant à la périphérie de la feuille placée en position supérieure une surface de contact allant généralement de 0,5 mm à 10 cm de largeur. Par périphérie, on entend la zone de bordure, de forme annulaire, d'une face principale de la feuille située à moins de 15 cm de tous les bords.

Le pressage exercé pendant l'étape de pressage peut être très léger. En effet, il suffit généralement de pousser un peu la feuille en position supérieure (pendant que l'aspiration vers le haut est encore exercée ou est en train de s'arrêter) pour que les deux feuilles soient plus intimement juxtaposées. De préférence, ce pressage est exercé en zone périphérique des feuilles. De préférence, le pressage est exercé de façon à empêcher le passage de l'air entre les feuilles.

Le moule inférieure de bombage est concave et sa concavité correspond sensiblement à la forme finale souhaitée du vitrage. Ce moule inférieur est plein et comprend à sa surface des ouvertures permettant l'aspiration de la feuille placée en position inférieure et avec laquelle il est en contact. Ce moule inférieur est de préférence au moins aussi grand que la feuille inférieure, de sorte que les feuilles superposées ne débordent en aucun endroit du moule.

Une fois que l'aspiration au travers du moule inférieur a commencé, il est possible d'arrêter le pressage en écartant la forme supérieure et le moule inférieur l'un de l'autre. A ce moment là, il n'y a plus d'aspiration vers le haut. L'aspiration vers le bas au travers du moule inférieur dure généralement de 1 s à 40 s.

Les aspirations exercées sur les feuilles d'une part pendant l'aspiration/maintien (vers le haut) et d'autre part pendant l'aspiration/bombage (vers le bas) sont donc différentes. En effet, dans le premier cas, il s'agit de créer une dépression en bordure des feuilles de façon à soulever les feuilles vers le haut et en plus aspirer l'air entre les feuilles (grand débit d'air, par exemple de l'ordre de 25 000 m³ d'air par heure pour un pare-brise de 1,8 m²), et dans le second cas, il s'agit de plaquer la feuille en position inférieure contre le moule inférieur (grande dépression et faible débit d'air). L'aspiration vers le haut nécessite donc de créer un fort flux d'air léchant la tranche des feuilles, alors que l'aspiration vers le bas (pour le bombage) nécessite une évacuation de l'air par des ouvertures réparties sensiblement sur l'ensemble de la surface du moule inférieur. Généralement, l'aspiration vers le haut de l'étape d'aspiration/maintien est générée au travers d'une jupe entourant la forme supérieure. Pour mieux pouvoir prendre en charge et soulever les feuilles, la jupe entourant la forme supérieure peut venir au contact du support sur lequel les feuilles reposent. Si ce support est un cadre, sa partie centrale laisse passer l'air sous les feuilles de verre qui sont alors soulevées sans difficultés. Si le support n'est pas un cadre, on peut prévoir au moins un orifices dans le support sous les feuilles pour que l'air aspiré par la jupe soulève plus facilement les feuilles.

Pour être prises en charge à l'étape d'aspiration/maintien, les feuilles superposées peuvent être planes ou déjà pré bombées avant ladite étape et ont une température autorisant leur bombage (généralement entre 560 et 610°C). Elles sont de préférence pré bombées. Généralement, ce pré bombage a été réalisé par effondrement par gravité sur un support de pré bombage, généralement du type cadre ou squelette. Lorsque les courbures à conférer lors du pré bombage sont relativement importantes, on peut avoir recours à un squelette articulé ou tout type de squelette soumettant les feuilles à plusieurs formes successivement. Notamment, il peut s'agir des squelettes décrits dans les EP 448447, EP 705798, ou la demande WO2004/103922. L'éventuelle étape de pré bombage donne aux feuilles une forme d'ébauche, intermédiaire entre la forme plane et la forme finale souhaitée. Ce pré bombage peut aussi donner à la périphérie du vitrage sa forme finale alors que la partie centrale est seulement ébauchée. On préfère l'existence d'un pré bombage lorsque la forme finale présente des courbures relativement accentuées, surtout lorsque la forme finale présente des courbures dans des directions orthogonales entre elles (double bombage). Les constructeurs automobiles recourent de plus en plus à ce type de formes complexes présentant un double bombage important. Ce pré bombage est généralement réalisé par gravité, les feuilles superposées étant placées sur un support adapté, lequel se dirige à travers un four tunnel en direction de la zone de bombage principale comprenant la forme supérieure et le moule inférieur de bombage. Le four tunnel sert à la fois à donner la température de bombage aux feuilles et à réaliser le pré bombage. Les supports de pré bombage circulent à travers le four tunnel par exemple du fait qu'ils sont montés sur des chariots munis de roues posées sur des rails. Les supports de pré bombage passent sous la forme supérieure, laquelle prend alors en charge les feuilles superposées grâce à l'aspiration vers le haut comme déjà expliqué.

Comme déjà dit, le support de pré bombage, notamment du type squelette, peut offrir comme surface de contact au verre, une forme qui se modifie au cours de son déplacement. Cette modification peut avoir lieu pendant le déplacement vers la position sous la forme supérieure, alors que le support porte les feuilles superposées. Notamment, la surface de contact du support de pré bombage peut prendre en périphérie la forme finale souhaitée pour le verre, avant même la prise en charge par la forme supérieure. Cela ne signifie pas que le verre prend déjà la forme finale souhaitée avant prise en charge par la forme supérieure, car l'effondrement du verre à la périphérie peut ne pas être terminé à ce moment là, et par ailleurs, même si la périphérie du verre touche partout le support de pré bombage, la zone centrale n'a de toute façon pas pris la forme finale souhaitée. Si le support de pré bombage a la forme périphérique finale souhaitée pour les feuilles au moment de la prise en charge par la forme supérieur, ce support peut aussi reprendre en charge les feuilles après le bombage final afin de les emmener vers la zone de refroidissement sans qu'il ne soit nécessaire de modifier de nouveau sa forme. Il est aussi possible que le support de pré bombage garde une forme périphérique d'ébauche jusqu'au moment de la prise en charge par la forme supérieure, puis, alors qu'il ne supporte plus les feuilles, qu'il prenne la forme périphérique finale souhaitée pour les feuilles. En effet, si ce support doit reprendre en charge les feuilles après le moulage final par le moule inférieur, afin d'emmener les feuilles en zone de refroidissement, il est préférable que ce support ait une forme correspondant bien à la forme finale souhaitée pour les feuilles.

Avant tout chauffage des feuilles, on peut placer entre les feuilles superposées en un ensemble, une poudre évitant le collage des différentes feuilles entre elles pendant le procédé de bombage. Le placement de cette poudre (pouvant par exemple être de la silice) est réalisé de façon connue de l'homme du métier.

La surface de contact de la forme supérieure peut correspondre à celle de la feuille supérieure lorsqu'elle est prête à être prise en charge, c'est-à-dire être plane si les feuilles arrivent planes sous elle, ou avoir une forme d'ébauche correspondant à celle donnée aux feuilles par l'éventuel pré bombage, ou avoir, au moins en périphérie, la forme finale souhaitée. De préférence, la forme supérieure a en périphérie la forme finale souhaitée. La forme supérieure n'a de toute façon pas de courbures moins accentuées que celles des feuilles qu'elle doit prendre en charge.

Quand le bombage est terminé et que les feuilles reposent sur le moule inférieur de bombage, on peut procéder au refroidissement des feuilles. Pour ce faire, on préfère séparer les feuilles du moule inférieur pour les placer ensuite sur un support dit de refroidissement. La séparation des feuilles du moule inférieur, peut par exemple être réalisée par aspiration vers le haut de façon similaire à celle exercée pendant l'étape d'aspiration/maintien. On peut même utiliser la même forme supérieure pour réaliser l'étape d'aspiration/maintien et la séparation du moule inférieur. On peut cependant aussi utiliser une seconde forme supérieure (pouvant être appelée FS2 dans le cadre de la présente demande) muni des moyens d'aspiration nécessaires (notamment du type jupe), l'entourant, pour effectuer cette opération de séparation. Après séparation du moule inférieur par prise en charge par une forme supérieure, cette dernière relâche alors les feuilles au dessus d'un support de refroidissement, lequel emmène les feuilles vers la zone de refroidissement adaptée. Lorsqu'on utilise une seconde forme supérieure, celle-ci présente avantageusement une forme de contact vis-à-vis de la feuille supérieure correspondant à la forme finale du vitrage. Dans tous les cas, le support de refroidissement présente avantageusement une forme de contact vis-à-vis de la feuille placée en position inférieure correspondant à la forme finale du vitrage. Il s'agit généralement d'un refroidissement proche du refroidissement naturel, du type de ceux exercés sur les feuilles destinées à intégrer un vitrage feuilleté pour pare-brise de véhicule automobile.

Ainsi, selon l'invention, les feuilles superposées bombées peuvent être séparées du moule inférieur concave après l'étape d'aspiration/bombage, par prise en charge à l'aide d'une forme supérieure munie de moyens d'aspiration créant un flux d'air vers le haut léchant la tranche des feuilles, ladite aspiration étant suffisante pour soulever et maintenir les feuilles superposées contre ladite forme supérieure, ladite forme supérieure laissant ensuite reposer les feuilles superposées bombées sur un support les amenant vers une zone de refroidissement pour la réalisation de l'étape de refroidissement.

Notamment, la forme supérieure séparant les feuilles bombées du moule inférieure peut être une seconde forme (FS2) distincte (mais pouvant être de même forme) de la première forme supérieure (FS1) prenant en charge les feuilles à l'étape d'aspiration/maintient, le passage des feuilles d'une position sous la forme FS1 à une position sous la forme FS2 pouvant être assurée par le déplacement du moule inférieur qui les supporte.

L'utilisation de deux formes supérieures permet d'accélérer les cadences du procédé par rapport à la variante à une seule forme supérieure. En effet, au moment ou la seconde forme (FS2) laisse reposer un ensemble de feuilles superposées bombées sur un support devant l'amener vers une zone de refroidissement pour la réalisation de l'étape de refroidissement, le bombage d'un autre ensemble de feuilles superposées peut déjà commencer, le moule inférieur concave étant placé sous la première forme (FS1).

Le support amenant un ensemble de feuilles superposé à la cellule de bombage peut être le même support qui récupère les feuilles après bombage pour les emmener vers la zone de refroidissement.

Généralement, la forme supérieure et le moule inférieur de bombage sont placés dans une cellule de bombage portée à la température de bombage.

Les feuilles superposées dans un même ensemble (ou paquet) ont sensiblement la même forme. Leur grandeur peut varier un peu dans le sens d'une diminution de leur surface quand on passe de la feuille placée en position inférieure à celle placée en position supérieure, de façon à ce que les bordures des feuilles coïncident bien après le bombage.

L'invention concerne également un dispositif permettant la mise en oeuvre du procédé selon l'invention. Le dispositif selon l'invention est un dispositif de bombage d'ensembles de feuilles de verre superposées comprenant
- une cellule de bombage portée à la température de bombage,
- une forme supérieure convexe FS1 munie de moyens d'aspiration autour d'elle, créant un flux d'air vers le haut léchant la tranche des feuilles, ladite aspiration étant suffisante pour soulever et maintenir les feuilles superposées contre ladite forme supérieure, et
- un moule inférieure concave plein muni d'ouvertures sur sa face principale et de moyens d'aspiration à travers ces ouvertures,
ladite forme supérieure et ledit moule inférieure ayant des formes complémentaires et pouvant se déplacer l'un vers l'autre selon un axe vertical pour presser les feuilles de verre,
- un train de supports de pré bombage se déplaçant pour passer les uns après les autres sous la forme supérieure convexe FS1.

Ce dispositif comprend un train de supports de pré bombage se déplaçant pour passer les uns après les autres sous la forme supérieure convexe (FS1) en vu d'une prise en charge des ensembles de feuilles superposées par ladite forme supérieure (FS1).

Ce dispositif peut par ailleurs comprendre une autre forme supérieure convexe (FS2) munie de moyens d'aspiration autour elle, créant un flux d'air vers le haut léchant la tranche des feuilles superposées, ladite aspiration étant suffisante pour soulever et maintenir les feuilles superposées contre elle, le moule inférieure concave pouvant être déplacé pour passer alternativement sous l'une puis l'autre des formes supérieures (FS1 et FS2).

Pour le cas ou le dispositif comprend deux formes supérieures, il peut également comprendre un train de supports de pré bombage se déplaçant pour passer sous les deux formes supérieures convexes.

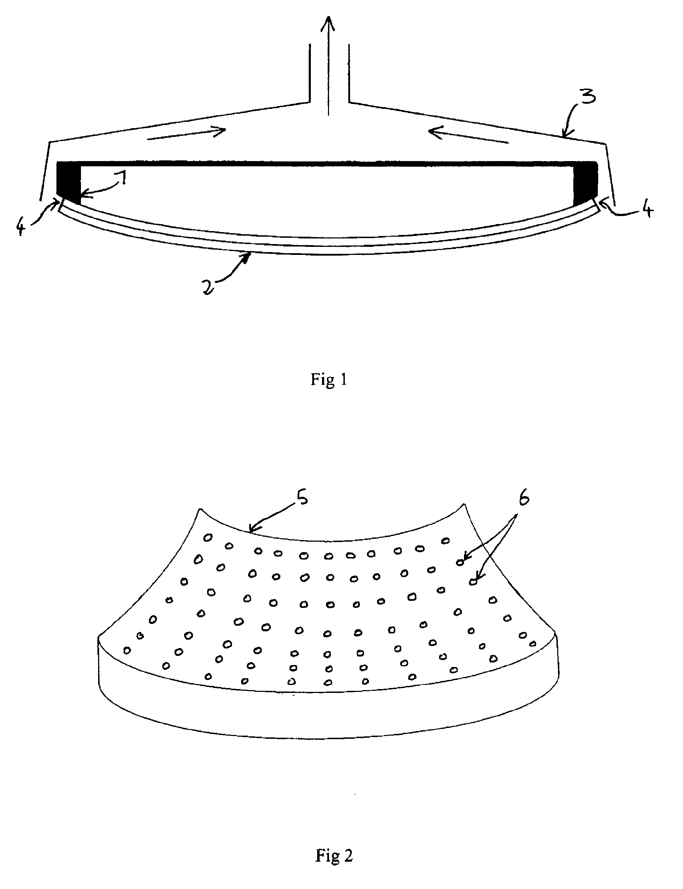

La figure 1 représente une forme supérieure 1 du type cadre annulaire venant en contact avec la périphérie de la feuille supérieure d'un ensemble 2 de deux feuilles superposées. Une jupe 3 entoure la forme 1 et est capable d'exercer une aspiration (selon les flèches) suffisante pour que les deux feuilles superposées soient maintenues contre la forme supérieure 1. L'air aspiré vient lécher la tranche 4 des feuilles. Généralement, la forme supérieure est revêtue d'un matériau en fibres réfractaires (fibres métalliques et/ou céramique) du type feutre, tissu ou tricot, venant adoucir le contact du verre avec elle et réduire les risques de marquage. De plus, l'air peut circuler à l'intérieur du matériau fibreux dans toutes les directions ce qui procure une diffusion supplémentaire du flux d'air.

La figure 2 représente un moule inférieur concave 5 muni sur sa face principale supérieure d'une multitude d'orifices 6. Une aspiration créé à travers ces orifices permet de bomber les feuilles superposées en les plaquant contre la face principale supérieure du moule. Généralement, ce moule inférieur est revêtu d'un matériau en fibres réfractaires (fibres métalliques et/ou céramique) du type feutre, tissu ou tricot, venant adoucir le contact du verre avec lui et réduire les risques de marquage. De plus, l'air peut circuler à l'intérieur du matériau fibreux dans toutes les directions ce qui procure une diffusion supplémentaire du flux d'air. Ce moule a la forme finale souhaité pour les feuilles.

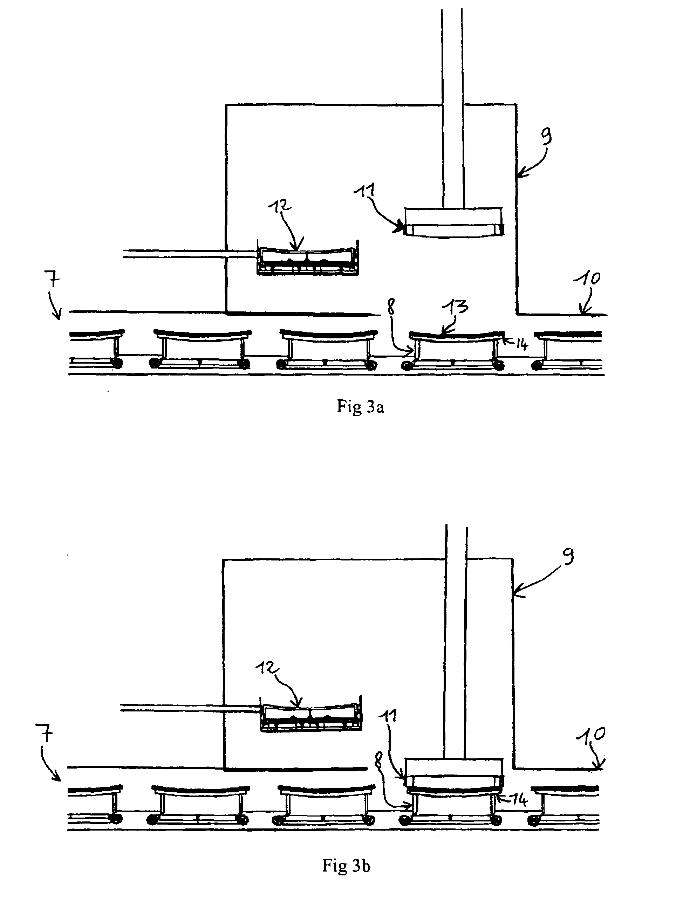

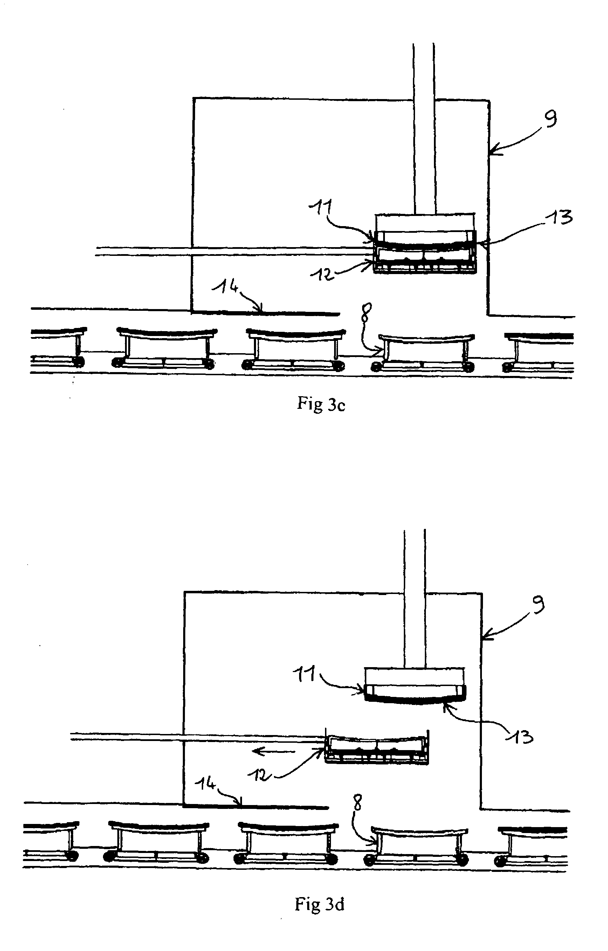

La figure 3 représente quelques séquences d'un mode de réalisation du procédé selon l'invention lorsqu'il ne comprend qu'une seule forme supérieure d'aspiration. Un train 7 de chariots 8 portant chacun deux feuilles de verre superposées, amène les feuilles (circulation de droite à gauche sur la figure 3) sous une cellule de bombage 9 dont l'intérieur est à la température de bombage. Chaque chariot porte une paire de feuilles 13 par l'intermédiaire d'un squelette de pré bombage 14. Ce squelette a pu avoir sa surface de contact modifiée dans le sens d'une augmentation des courbures au cours de son trajet vers la cellule de bombage. A l'arrivée sous la cellule 9, chaque chariot a déjà parcouru une certaine distance à travers d'un four tunnel 10 de façon à provoquer le pré bombage des feuilles. Sous la cellule 9, le squelette présente une surface de contact (seulement pour la périphérie des feuilles) correspondant à la forme finale souhaitée, et les feuilles ont pris cette forme en périphérie mais pas dans leur région centrale. La cellule 9 contient une forme supérieure 11 équipée d'une jupe (sur le principe de la figure 1) pouvant se déplacer verticalement, et un moule inférieur concave 12 muni d'ouvertures (sur le principe de la figure 2) pouvant se déplacer horizontalement. La forme supérieure est un cadre ayant la forme d'un anneau et dont la forme correspond à la forme finale souhaitée pour les feuilles. Le moule inférieur a la forme finale souhaitée pour les feuilles. Au moment de la figure 3a, le train s'arrête de façon à ce qu'un chariot se trouve juste à la verticale de la forme supérieure. La forme supérieure 11 descend alors vers le chariot 8 pour prendre en charge les deux feuilles superposées grâce à l'aspiration de sa jupe (figure 3b). La forme supérieure 11 remonte avec les feuilles, suffisamment haut pour que le moule inférieur 12, puisse se placer juste sous elle par translation horizontale. La forme supérieure redescend alors un peu pour presser légèrement la périphérie des feuilles contre le moule inférieur (la jupe est encore en fonctionnement à ce moment là) comme le montre la figure 3c. L'aspiration vers le bas par les ouvertures de la face principale du moule inférieur peut alors commencer pour produire le bombage par plaquage contre ladite face. Cette aspiration dure généralement de 1 s à 40 s. Quand le bombage est terminé, la forme supérieure peut remonter avec les feuilles 13, le temps que le moule inférieur 12 reprenne sa place de repos sur la gauche. La forme supérieure 11 peut alors redescendre pour livrer les deux feuilles bombées 13 sur le même chariot 8 que celui qui l'a amené. Le train 7 peut repartir vers la gauche afin que la paire de feuilles suivante soit positionnée juste en-dessous de la forme supérieure 11 et subisse le même cycle de bombage que la paire qui l'a précédée. Le train 7 circule donc de façon intermittente en succédant en permanence marche et arrêt, chaque marche correspondant à une translation d'une distance d'un chariot. Les feuilles sont progressivement emmenées vers la gauche en direction d'une zone de refroidissement. Une paroi horizontale fixe 14 placée sous la position de repos (vers la gauche) du moule inférieur 12 contribue à isoler thermiquement la cellule de bombage du tunnel menant à la zone de refroidissement.

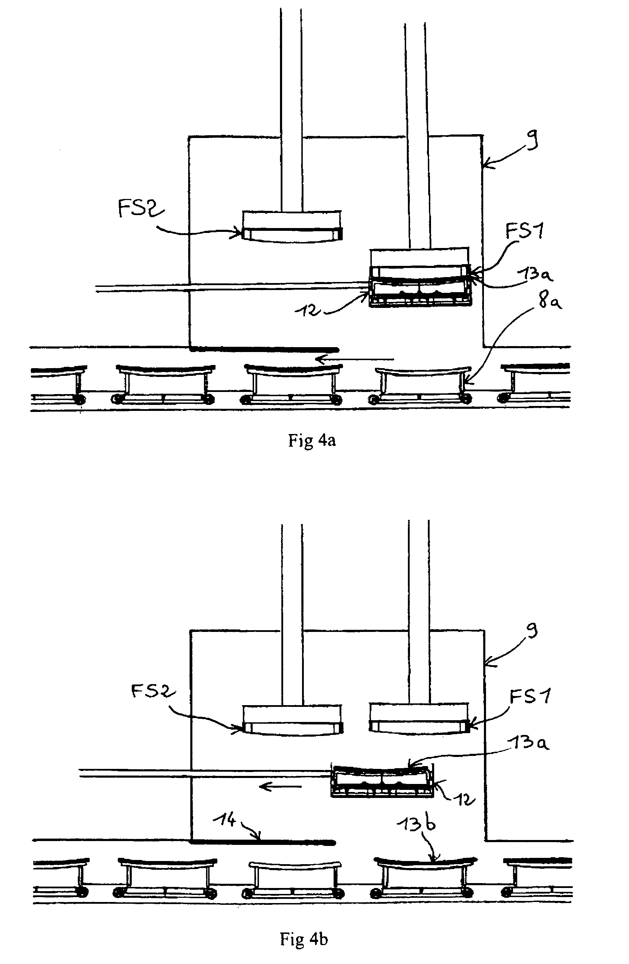

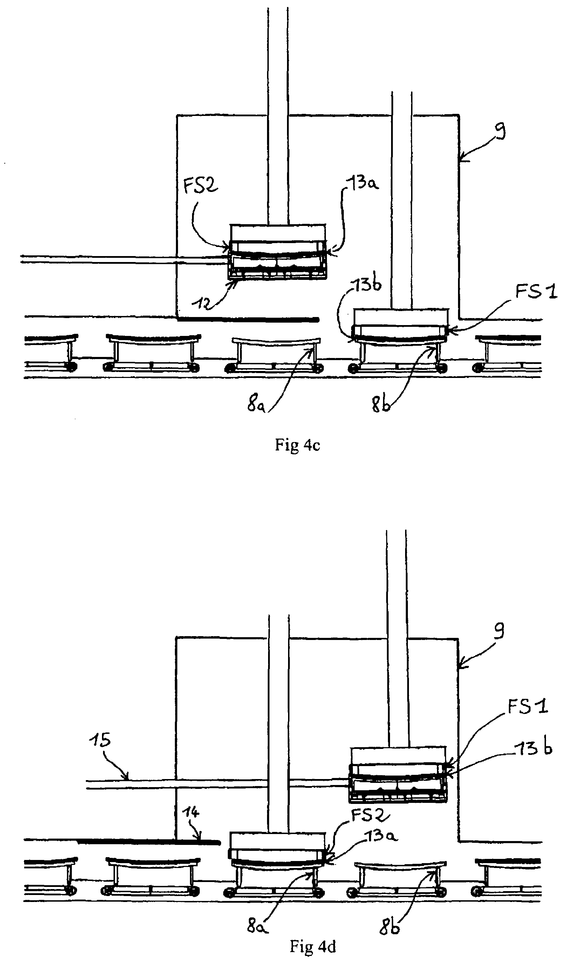

La figure 4 représente quelques séquences d'un mode de réalisation du procédé selon l'invention lorsqu'il comprend deux formes supérieures d'aspiration FS1 et FS2. Le début du procédé commence comme celui commenté pour la figure 3 : le train apporte les paires de feuilles pré bombées par gravité sur des squelettes, et s'arrête de façon à ce que l'un des chariots (le chariot 8a) portant la paire de feuilles 13a s'arrête juste sous la première forme supérieure FS1. Celle-ci prend alors en charge la paire de feuilles 13a et remonte avec elle suffisamment haut pour que le moule inférieur concave 12 puisse être placé sous les feuilles 13a. La forme FS1 redescend alors pour provoquer le pressage des feuilles entre FS1 et le moule inférieur 12. La figure 4a représente cet instant du procédé. Pendant le pressage, puis l'aspiration s'exerçant sur les feuilles 13a, le train se déplace vers la gauche d'une distance d'un chariot pour que le chariot 8a se retrouve sous la forme supérieure FS2. Après commencement du bombage, la forme FS1 se relève sans soulever les feuilles 13a, ces dernières restant posées sur le moule inférieur 12 qui continue le bombage par aspiration. En effet, même si aucune forme supérieure ne touche les feuilles à ce stade, les feuilles restent bien plaquées ensemble sans se désolidariser car ce qui est important, c'est qu'un pressage ait lieu au moins au tout début de l'aspiration de bombage. Le moule inférieur 12 est alors déplacé vers la gauche (figure 4b) pour se retrouver sous la forme FS2. La forme FS1 peut alors descendre pour prendre en charge la paire de feuilles suivantes 13b. De son coté, la forme supérieure FS2 descend pour prendre en charge la paire de feuilles 13a (figure 4c). La forme FS1 remonte avec la paire 13b et le moule inférieur 12 est alors placé sous la forme FS1 pour procéder au pressage puis bombage par aspiration de la paire de feuilles 13b de la même façon que cela a été décrit pour la paire de feuilles 13a. La cloison 14 qui isolait la cellule de bombage du tunnel menant à la zone de refroidissement est ici une paroi mobile qui a été escamotée vers la gauche à ce stade du procédé, de façon à ce que la forme FS2 portant la paire de feuilles 13a puisse reposer cette paire sur le chariot 8a (figure 4d). Bien entendu, le support 15 actionnant la translation du moule inférieur 12 présente l'orifice nécessaire pour que la forme FS2 puisse descendre jusqu'aux chariots. On peut par ailleurs également actionner la translation du moule inférieur 12 par le fond de la cellule, le support 15 étant alors perpendiculaire à la figure 4d. Après dépose de la paire 13a sur le support 8a, la forme FS2 remonte, la cloison mobile 14 revient vers la gauche sous la forme FS2 afin d'isoler la cellule de bombage. Le train de chariot se déplace alors vers la gauche d'une distance d'un chariot. On voit que ce mode de réalisation est plus performant que celui de la figure 3 car on a pu ici déplacer la paire 13a pendant son bombage et commencé à mettre en position une nouvelle paire 13b pendant que le bombage de la paire 13a se terminait. Avec ce mode de réalisation à deux formes supérieures FS1 et FS2, le gain en temps de cycle correspond au temps de transfert des chariots, car on peut presser alors que le train de chariots se déplace.

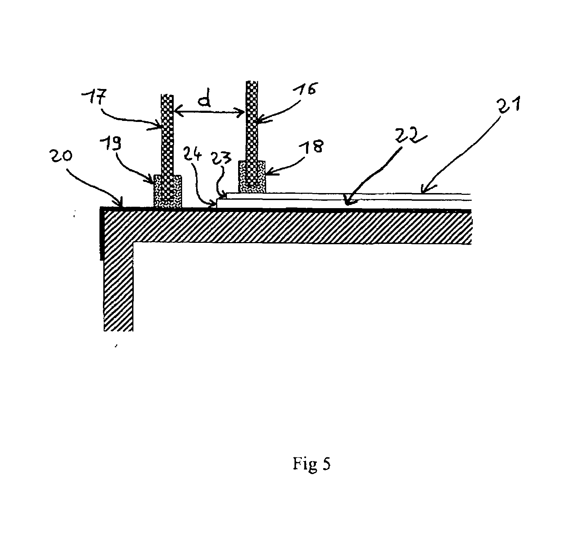

La figure 5 représente la partie d'une forme supérieure 16 venant au contact du verre, ladite forme supérieure étant équipée d'une jupe 17. La forme supérieure 16 est muni d'un feutre 18 venant atténuer le contact avec le verre. La jupe 17 est également munie d'une feutre 19 pour atténuer le contact avec le support 20. A l'instant représenté par la figure 5, la forme supérieure va prendre en charge deux feuilles de verre superposées 21 et 22 reposant sur le support 20. Pour faciliter le soulèvement des feuilles, on peut prévoir des orifices (non représentés) dans le support et situés sous le verre. La feuille 22 est un peu plus grande que la feuille 21 de façon à ce que les bordures des feuilles coïncident bien après bombage selon la forme finale. La partie représentée de la jupe 17 peut être mobile verticalement par rapport à la forme 16. De cette façon, quand l'ensemble jupe/forme supérieur vient à la rencontre des feuilles et du support, c'est la jupe 17 qui vient d'abord en contact avec le support 20, ladite jupe s'arrêtant alors de descendre, mais la forme supérieure continue un peu (généralement de 1 mm à 2 cm) de descendre à la rencontre de la feuille supérieur 21. Cette procédure donne de la souplesse au procédé. De façon à réduire les débits nécessaires dans la jupe, il y a lieu de réduire autant que possible la distance (d) entre la jupe et la forme supérieure. Par exemple, cette distance peut aller de 5 mm à 40 mm, par exemple environ 20 mm. Les tranches 23 et 24 des feuilles sont situées entre la jupe et la forme supérieure.

## Revendications

1. Procédé de bombage de feuilles de verre (13) superposées, portées à leur température de bombage, comprenant:
- une étape dite d'aspiration/maintien comprenant la prise en charge des feuilles par une forme supérieure (11, FS1) munie de moyens d'aspiration (3) créant un flux d'air vers le haut léchant la tranche (4) des feuilles, ladite aspiration étant suffisante pour soulever et maintenir les feuilles superposées contre ladite forme supérieure, puis
- une étape dite de pressage comprenant le pressage des feuilles entre la forme supérieure et une forme inférieure (5, 12) concave pleine munie d'ouvertures (6), ledit pressage commençant alors que l'aspiration de l'étape précédente n'est pas encore terminée ou se termine, puis
- une étape dite d'aspiration/bombage comprenant le formage des feuilles superposées, par aspiration de la face principale de la feuille inférieure au travers des ouvertures (6) du moule inférieur concave (5, 12), ledit formage par aspiration commençant alors que le pressage de l'étape précédente n'est pas encore terminé, puis
- une étape dite de refroidissement comprenant le refroidissement des feuilles.

2. Procédé selon la revendication précédente, **caractérisé en ce que** les feuilles superposées sont pré bombées avant l'étape d'aspiration/maintien.

3. Procédé selon l'une des revendications précédentes, **caractérisé en ce que** la forme supérieure (11, FS1) est un cadre.

4. Procédé selon la revendication précédente, **caractérisé en ce que** le cadre (11, FS1) est une bande d'un matériau offrant à la périphérie de la feuille placée en position supérieure une surface de contact allant de 0,5 mm à 10 cm de largeur.

5. Procédé selon l'une des revendications précédentes, **caractérisé en ce que** les feuilles superposées bombées sont séparées du moule inférieur concave (5, 12) après l'étape d'aspiration/bombage, par prise en charge à l'aide d'une forme supérieure (11, FS2) munie de moyens d'aspiration (3) créant un flux d'air vers le haut léchant la tranche (4) des feuilles, ladite aspiration étant suffisante pour soulever et maintenir les feuilles superposées contre ladite forme supérieure (11, FS2), ladite forme supérieure laissant ensuite reposer les feuilles superposées bombées sur un support (8, 8a) les amenant vers une zone de refroidissement pour la réalisation de l'étape de refroidissement.

6. Procédé selon la revendication précédente, **caractérisé en ce que** la forme supérieure séparant les feuilles bombées du moule inférieure est une forme FS2 distincte de la forme supérieure FS1 prenant en charge les feuilles à l'étape d'aspiration/maintient, le passage des feuilles d'une position sous la forme FS1 à une position sous la forme FS2 étant assurée par le déplacement du moule inférieur qui les supporte.

7. Procédé selon la revendication précédente, **caractérisé en ce qu'**au moment ou la forme FS2 laisse reposer les feuilles superposées bombées (13a) sur un support l'amenant vers une zone de refroidissement pour la réalisation de l'étape de refroidissement, le bombage d'un autre ensemble de feuilles superposées (13b) a déjà commencé, le moule inférieur concave (12) étant placé sous la forme FS1.

8. Procédé selon l'une des revendications précédentes **caractérisé en ce que** pour l'étape de refroidissement, les feuilles sont posées sur un support de refroidissement qui les emmène vers une zone de refroidissement, le support de refroidissement étant le même que le support les ayant amené sous la forme supérieure FS1.

9. Dispositif de bombage d'ensembles de feuilles de verre superposées comprenant
- une cellule de bombage (9) portée à la température de bombage,
- une forme supérieure convexe FS1 placée dans la cellule de bombage (9), ladite forme supérieure étant munie de moyens d'aspiration (3) autour d'elle, créant un flux d'air vers le haut léchant la tranche (4) des feuilles, ladite aspiration étant suffisante pour soulever et maintenir les feuilles superposées (13) contre ladite forme supérieure,
- un moule inférieur concave plein (12) placé dans la cellule de bombage (9), ledit moule inférieur (12) étant muni d'ouvertures (6) sur sa face principale et de moyens d'aspiration à travers ces ouvertures, ladite forme supérieure (FS1) et ledit moule inférieur (12) ayant des formes complémentaires et pouvant se déplacer l'un vers l'autre selon un axe vertical pour presser les feuilles de verre (13),
- un train (7) de supports de pré bombage se déplaçant pour passer les uns après les autres sous la forme supérieure convexe FS1.

10. Dispositif selon la revendication précédente, **caractérisé en ce que** la forme supérieure FS1 est un cadre.

11. Dispositif selon la revendication précédente, **caractérisé en ce que** le cadre FS1 est une bande d'un matériau offrant à la périphérie de la feuille placée en position supérieure une surface de contact allant de 0,5 mm à 10 cm de largeur.

12. Dispositif selon l'une des revendications de dispositif précédentes, **caractérisé en ce qu'**il comprend une autre forme supérieure convexe FS2 munie de moyens d'aspiration (3) autour d'elle, créant un flux d'air vers le haut léchant la tranche (3) des feuilles, ladite aspiration étant suffisante pour soulever et maintenir les feuilles superposées contre elle, le moule inférieur concave (12) pouvant être déplacé pour passer alternativement sous l'une puis l'autre des formes supérieures.

13. Dispositif selon la revendication précédente, **caractérisé en ce qu'**il comprend un train de supports de pré bombage se déplaçant pour passer sous la forme supérieure convexe FS1 puis sous la forme supérieure convexe FS2.

## Claims

1. Method of bending superposed sheets of glass (13) brought to their bending temperature, comprising:
- a suction/holding step comprising the sheets being picked up by a top form (11, FS1) furnished with suction means (3) creating an upward airflow blowing over the rim (4) of the sheets, said suction being sufficient to lift and hold the superposed sheets against said top form, then
- a pressing step comprising the pressing of the sheets between the top form and a full surface solid concave bottom form (5, 12) furnished with openings (6), said pressing beginning while the suction of the preceding step is not yet finished or is finishing, then
- a suction/bending step comprising the forming of the superposed sheets, by suction of the main face of the bottom sheet through the openings (6) of the bottom concave mold (5, 12), said suction forming beginning while the pressing of the preceding step is not yet finished, then
- a cooling step comprising the cooling of the sheets.

2. Method according to the preceding claim, **characterized in that** the superposed sheets are pre-bent before the suction/holding step.

3. Method according to one of the preceding claims, **characterized in that** the top form (11, FS1) is a frame.

4. Method according to the preceding claim, **characterized in that** the frame (11, FS1) is a strip of a material offering, at the periphery of the sheet placed in the top position, a contact surface from 0.5 mm to 10 cm wide.

5. Method according to one of the preceding claims, **characterized in that** the bent superposed sheets are separated from the bottom concave mold (5, 12) after the suction/bending step, by being picked up with the aid of a top form (11, FS2) furnished with suction means (3) creating an upward airflow blowing over the rim (4) of the sheets, said suction being sufficient to lift and hold the superposed sheets against said top form (11, FS2), said top form then letting the bent superposed sheets rest on a support (8, 8a) taking them toward a cooling zone for the completion of the cooling step.

6. Method according to the preceding claim, **characterized in that** the top form separating the bent sheets from the bottom mold is a form FS2 distinct from the top form FS1 picking up the sheets at the suction/holding step, the sheets being moved from a position beneath the form FS1 to a position beneath the form FS2 by the movement of the bottom mold supporting them.

7. Method according to the preceding claim, **characterized in that** when the form FS2 lets the bent superposed sheets (13a) rest on a support taking them to a cooling zone for the completion of the cooling step, the bending of another set of superposed sheets (13b) has already begun, the bottom concave mold (12) being placed beneath the form FS1.

8. Method according to one of the preceding claims, **characterized in that**, for the cooling step, the sheets are placed on a cooling support which takes them to a cooling zone, the cooling support being the same as the support that brought them under the top form FS1.

9. Device for bending sets of superposed sheets of glass comprising
- a bending unit (9) brought to the bending temperature,
- a convex top form FS1 placed in the bending unit (9), said top form being furnished with means of suction (3) around it, creating an upward airflow blowing over the rim (4) of the sheets, said suction being sufficient to lift and hold the superposed sheets (13) against said top form,
- a bottom solid concave mold (12) placed in the bending unit (9), said bottom mold (12) being furnished with openings (6) on its main face and means of suction through these openings,
said top form (FS1) and said bottom mold (12) having complementary shapes and being able to move toward one another along a vertical axis to press the sheets of glass (13),
- a train (7) of pre-bending supports moving to pass one after the other beneath the top convex form FS1.

10. Device according to the preceding claim, **characterized in that** the top form FS1 is a frame.

11. Device according to the preceding claim, **characterized in that** the frame FS1 is a strip of a material offering, at the periphery of the sheet placed in the top position, a contact surface from 0.5 mm to 10 cm wide.

12. Device according to one of the preceding device claims, **characterized in that** it comprises another convex top form FS2 furnished with means of suction (3) around it, creating an upward airflow blowing over the rim (3) of the sheets, said suction being sufficient to lift and hold the superposed sheets against it, the bottom concave mold (12) being able to be moved to pass alternately beneath one and then the other of the top forms.

13. Device according to the preceding claim, **characterized in that** it comprises a train of pre-bending supports moving to pass beneath the top convex form FS1 and then beneath the top convex form FS2.

## Patentansprüche

1. Verfahren zum Wölben von auf ihre Wölbungstemperatur gebrachten übereinander liegenden Glasscheiben (13), umfassend:
- einen sogenannten Ansaug-/Halteschritt, der das Übernehmen der Scheiben durch eine obere Form (11, FS1) umfasst, welche mit Saugmitteln (3) ausgestattet ist, die einen nach oben gerichteten, die Kante (4) der Scheiben bestreichenden Luftstrom erzeugen, wobei das Ansaugen ausreichend ist, um die übereinander liegenden Scheiben anzuheben und an der oberen Form zu halten, anschließend
- einen sogenannten Pressschritt, der das Pressen der Scheiben zwischen der oberen Form und einer konkaven, massiven, mit Öffnungen (6) versehenen unteren Form (5, 12) umfasst, wobei das Pressen beginnt während das Ansaugen des vorhergehenden Schrittes noch nicht beendet ist oder endet, dann
- einen sogenannten Ansaug-/Wölbungsschritt, der das Formen der übereinander liegenden Scheiben durch Ansaugen der Hauptseite der unteren Scheibe durch die Öffnungen (6) der konkaven unteren Form (5, 12) umfasst, wobei das Ansaugformen beginnt während das Pressen des vorhergehenden Schrittes noch nicht beendet ist, anschließend
- einen sogenannten Abkühlschritt, der das Abkühlen der Scheiben umfasst.

2. Verfahren nach dem vorstehenden Anspruch, **dadurch** gekenntzeichnet, dass die übereinander liegenden Scheiben vor dem Ansaug-/Halteschritt vorgewölbt werden.

3. Verfahren nach einem der vorstehenden Ansprüche, **dadurch gekennzeichnet, dass** die obere Form (11, FS1) ein Rahmen ist.

4. Verfahren nach dem vorstehenden Anspruch, **dadurch gekennzeichnet, dass** der Rahmen (11, FS1) ein Streifen aus einem Material ist, das dem Umfang der in der oberen Position angeordneten Scheibe eine Kontaktfläche mit einer Breite zwischen 0,5 mm und 10 cm bietet.

5. Verfahren nach einem der vorstehenden Ansprüche, **dadurch gekennzeichnet, dass** die gewölbten, übereinander liegenden Scheiben nach dem Ansaug-/Wölbungsschritt von der konkaven unteren Form (5, 12) getrennt werden, indem sie mit Hilfe einer oberen Form (11, FS2) übernommen werden, welche mit Saugmitteln (3) ausgestattet ist, die einen nach oben gerichteten, die Kante (4) der Scheiben bestreichenden Luftstrom erzeugen, wobei das Ansaugen ausreichend ist, um die übereinander liegenden Scheiben anzuheben und an der oberen Form (11, FS2) zu halten, wobei die obere Form anschließend die gewölbten, übereinander liegenden Scheiben auf einem Träger (8, 8a) ruhen lässt, der sie zu einem Abkühlbereich für die Durchführung des Abkühlschrittes führt.

6. Verfahren nach dem vorstehenden Anspruch, **dadurch gekennzeichnet, dass** die obere Form, welche die gewölbten Scheiben von der unteren Form trennt, eine von der oberen Form FS1, die die Scheiben bei dem Ansaug-/Halteschritt übernimmt, getrennte Form FS2 ist, wobei der Übergang der Scheiben von einer Position unter der Form FS 1 zu einer Position unter der Form FS2 durch das Bewegen der unteren Form, die sie trägt, sichergestellt wird.

7. Verfahren nach dem vorstehenden Anspruch, **dadurch gekennzeichnet, dass** in dem Augenblick, in dem die Form FS2 die gewölbten, übereinander liegenden Scheiben (13a) auf einem Träger ruhen lässt, der sie zu einem Abkühlbereich für die Durchführung des Abkühlschrittes führt, der Wölbungsvorgang einer weiteren Einheit von übereinander liegenden Scheiben (13b) bereits begonnen hat, wobei die konkave untere Form (12) unter der Form FS1 platziert ist.

8. Verfahren nach einem der vorstehenden Ansprüche, **dadurch gekennzeichnet, dass** die Scheiben für den Abkühlschritt auf einen Abkühlträger gelegt werden, der sie zu einem Abkühlbereich abtransportiert, wobei der Abkühlträger der gleiche ist wie der Träger, der sie unter die obere Form FS1 geführt hat.

9. Vorrichtung zum Wölben von Einheiten übereinander liegender Glasscheiben, umfassend
- eine Wölbungskammer (9), die auf die Wölbungstemperatur gebracht wird,
- eine in der Wölbungskammer (9) angeordnete konvexe obere Form FS 1, wobei die obere Form mit Saugmitteln (3) um sie herum ausgestattet ist, die einen nach oben gerichteten, die Kante (4) der Scheiben bestreichenden Luftstrom erzeugen, wobei das Ansaugen ausreichend ist, um die übereinander liegenden Scheiben (13) anzuheben und an der oberen Form zu halten,
- eine in der Wölbungskammer (9) angeordnete massive, konkave untere Form (12), wobei die untere Form (12) an ihrer Hauptseite mit Öffnungen (6) und mit Mitteln zum Ansaugen durch diese Öffnungen ausgestattet ist, wobei die obere Form (FS1) und die untere Form (12) ergänzende Formen aufweisen und sich entlang einer vertikalen Achse aufeinander zu bewegen können, um die Glasscheiben (13) zu pressen,
- eine Folge (7) von Vorwölbungsträgern, die sich bewegen, um nacheinander unter die konvexe obere Form FS1 zu gelangen.

10. Vorrichtung nach dem vorstehenden Anspruch, **dadurch gekennzeichnet, dass** die obere Form FS 1 ein Rahmen ist.

11. Vorrichtung nach dem vorstehenden Anspruch, **dadurch gekennzeichnet, dass** der Rahmen FS 1 ein Streifen aus einem Material ist, das dem Umfang der in der oberen Position angeordneten Scheibe eine Kontaktfläche mit einer Breite zwischen 0,5 mm und 10 cm bietet.

12. Vorrichtung nach einem der vorstehenden Vorrichtungsansprüche, **dadurch gekennzeichnet, dass** sie eine weitere konvexe obere Form FS2 umfasst, die mit Saugmitteln (3) um sie herum ausgestattet ist, die einen nach oben gerichteten, die Kante (4) der Scheiben bestreichenden Luftstrom erzeugen, wobei das Ansaugen ausreichend ist, um die übereinander liegenden Scheiben anzuheben und an ihr zu halten, wobei die konkave untere Form (12) bewegt werden kann, um abwechselnd unter die eine, dann unter die andere der oberen Formen zu gelangen.

13. Vorrichtung nach dem vorstehenden Anspruch, **dadurch gekennzeichnet, dass** sie eine Folge von Vorwölbungsträgern umfasst, die sich bewegen, um unter die konvexe obere Form FS1, dann unter die konvexe obere Form FS2 zu gelangen.
